# EUROPEAN PATENT APPLICATION

(11) **EP 3 184 412 A1**
(43) Date of publication of application: **28.06.2017**
(21) Application number: 15834575.1
(22) Date of filing: 22.06.2015
(51) Int. Cl.: B62M 6/90, B62H 5/00, B62M 6/45

(54) **BATTERY BRACKET TO BE USED IN POWER ASSIST MOVING BODY, BATTERY UNIT, POWER ASSIST UNIT, AND POWER ASSIST MOVING BODY**

(30) Priority: 22.08.2014 JP 2014169130
(71) Applicant: Sunstar Giken Kabushiki Kaisha, Takatsuki-shi, Osaka 569-1134 (JP)
(72) Inventor: YOSHIIE, Akihito, Takatsuki-shi Osaka 569-1134 (JP); YAMAGUCHI, Katsuhiro, Takatsuki-shi Osaka 569-1134 (JP); NISHIKAWA, Masafumi, Takatsuki-shi Osaka 569-1134 (JP); TAKAMA, Akira, Takatsuki-shi Osaka 569-1134 (JP)
(74) Representative: Jenkins, Peter David
(86) International application number: PCT/JP2015/067835
(87) International publication number: WO 2016/027562

(57) **Abstract**

In an electrically assisted moving body, a reduction in the charging frequency of a battery, and long-distance travel, are implemented.

A battery bracket is provided for attaching, to an electrically assisted moving body capable of supplementing a first driving force generated by human power with a second driving force generated by electrical power, a battery for use in the electrically assisted moving body. This battery bracket includes an extension section extending in a prescribed direction, and a plurality of projection sections projecting from the extension section in a direction intersecting the prescribed direction, wherein the plurality of projection sections are mutually spaced along the prescribed direction.

## Description

### TECHNICAL FIELD

The present invention relates to a battery of an electrically assisted moving body.

### BACKGROUND ART

An electrically assisted bicycle is known that is capable of supplementing a driving force generated by the pedaling force of pedals with a driving force (assisting force) generated by a motor driving force (for example, refer to Japanese Patent Application Laid-Open No. 2008-254592). Such an electrically assisted bicycle has a battery mounted as a power source for a motor. A user is required to recharge the battery before the charge amount runs out.

### CITATION LIST

### PATENT LITERATURE

Patent Literature 1: Japanese Patent Application Laid-Open No. 2008-254592

### SUMMARY OF INVENTION

### TECHNICAL PROBLEM

In such an electrically assisted bicycle, there will be a deterioration in the performance of the battery with the passage of the usage period. Accordingly, in the case where one battery is used for a long time without being replaced, a user will be required to frequently perform charging work, and cannot travel a long distance travel without charging. Moreover, in general, the battery has a configuration that can be locked so as to be undetachable, from the viewpoint of theft prevention. It is desirable for this configuration to be simple. Moreover, it is desirable to have a battery that is easy for a user to use. Such problems are not limited to electrically assisted bicycles, and are common to various electrically assisted moving bodies capable of supplementing a driving force generated by human power with a driving force generated by electrical power.

### SOLUTION TO PROBLEM

The present invention has been made to solve at least a part of the above described problems, and is capable of being implemented, for example, as the following aspects.

According to a first aspect of the present invention, a battery bracket is provided for attaching, to an electrically assisted moving body capable of supplementing a first driving force generated by human power with a second driving force generated by electrical power, a battery for use in the electrically assisted moving body. This battery bracket includes an extension section extending in a prescribed direction, and a plurality of projection sections projecting from the extension section in a direction intersecting the prescribed direction, wherein the plurality of projection sections are mutually spaced along the prescribed direction.

According to such a battery bracket, a battery having holes formed to allow the insertion of the projection sections can be attached. Since a plurality of the projection sections are provided, a plurality of battery main bodies can be stacked and attached to the battery bracket. Moreover, by stacking and using a plurality of battery main bodies in the electrically assisted moving body, the charging frequency of the battery can be reduced, or alternatively, the distance capable of travelling with the electrically assisted moving body in a state where an assisting force is used can be lengthened, compared to the case where using a single battery main body. It is needless to say that this battery bracket can also be used in the case where a single battery main body is attached. For example, a user may use only a single battery main body, in an initial stage of use of the electrically assisted moving body, and in the case where the performance of this battery main body deteriorates to a prescribed level, may purchase a new battery main body, and use this new battery main body by stacking with the battery main body used up to now. Therefore, it will be easy for a user to use.

According to a second aspect of the present invention, an engaging section for engaging with a key structure provided on the battery is formed on each of the projection sections, in the first aspect. According to such an aspect, a battery can be attached, which includes a key section having a hole formed to allow the insertion of the projection section, wherein the key section has a key structure for engaging with the engaging section, in a state where the projection section has been inserted into the hole. Namely, locking can be easily performed, by stacking a desired number of battery main bodies, and inserting the projection section of the position corresponding to the number of stacked battery main bodies into the hole.

According to a third aspect of the present invention, the battery bracket, in the first aspect or the second aspect, additionally includes a supporting section for supporting the battery. The plurality of projection sections are provided on one end side of the extension section. The supporting section is provided on the other end side of the extension section. According to such an aspect, the key section can be locked, in a state where at least one battery main body is interposed between the supporting section and the key section, by arranging the at least one battery main body from the supporting section side, and arranging the key section at this distal end (namely, the end part opposite to the supporting section). Therefore, in the case where a plurality of battery main bodies are stacked and used, the entire battery can be locked by performing locking at only one location. It is needless to say that, in the case where only a single battery main body is attached, a battery that includes this one battery main body can be locked by the same method. The key section used in the third aspect is not limited to the key section described with relation to the second aspect, and may have any key structure that can perform locking in a state where at least one battery main body is interposed between the key section and the supporting section.

According to a fourth aspect of the present invention, a battery bracket is provided for attaching, to an electrically assisted moving body capable of supplementing a first driving force generated by human power with a second driving force generated by electrical power, a battery for use in the electrically assisted moving body. This battery bracket includes an extension section extending in a prescribed direction. This battery bracket also includes a plurality of holes formed in a direction intersecting the prescribed direction, and the plurality of holes are mutually spaced along the prescribed direction, on the extension section. According to such a battery bracket, a battery having projection sections formed to be insertable into one of the plurality of holes can be attached. Since a plurality of holes are provided, a plurality of battery main bodies can be stacked and attached to the battery bracket.

According to a fifth aspect of the present invention, a battery unit is provided for use in an electrically assisted moving body. This battery unit includes the battery bracket of any one of the first to fourth aspects, and a battery. The battery includes at least one battery main body configured to be stackable. According to such an aspect, an effect similar to that of the first to fourth aspects is accomplished.

According to a sixth aspect of the present invention, the battery, in the fifth aspect when including the second aspect, includes a key section having a hole formed to allow the insertion of one of the plurality of projection sections, the key section having a key structure for engaging with the engaging section, in a state where the projection section has been inserted into the hole. According to such an aspect, an effect similar to that of the second aspect is accomplished.

According to a seventh aspect of the present invention, the battery unit, in the sixth aspect when including the third aspect, is configured so as to interpose the at least one battery main body between the supporting section and the key section, by arranging the at least one battery main body at the supporting section side, and arranging the key section on an end part opposite to the supporting section. According to such an aspect, an effect similar to that of the third aspect is accomplished.

According to an eighth aspect of the present invention, the battery, in the sixth aspect when including the fourth aspect, includes projection sections formed to be insertable into one of the plurality of holes. According to such an aspect, an effect similar to that of the fourth aspect is accomplished.

According to a ninth aspect of the present invention, the at least one battery main body, in any one of the fifth to eighth aspects, has an electrical circuit configuration constituted to be exclusively connectable to an input/output of the battery, in stacking more than the one battery main body. According to such an aspect, the plurality of battery main bodies are not connected at the same time to the motor. Namely, since the plurality of battery main bodies are not connected in parallel, the battery main bodies that are not relatively deteriorated will not deteriorate by being affected by a battery main body that is relatively deteriorated.

According to a tenth aspect of the present invention, the at least one battery main body is provided as a plurality of the battery main bodies, in the ninth aspect. The plurality of battery main bodies include a same electrical circuit configuration. According to such an aspect, the plurality of battery main bodies can be stacked in any arrangement order, and the convenience of a user will be improved.

According to an eleventh aspect of the present invention, each of the plurality of battery main bodies, in the tenth aspect, includes a battery cell, and at least one bypass line for connecting two electrical connection points without using the battery cell. According to such an aspect, the effect of the sixth aspect is accomplished, by a simple circuit configuration.

According to a twelfth aspect of the present invention, the battery unit, in any one of the ninth to eleventh aspects, additionally has a switching control section constituted so as to switch the exclusive connection of the ninth aspect. The switching control section determines a battery main body to be charged or discharged, based on a voltage detected from each of the plurality of stacked battery main bodies, and switches the exclusive connection so as to charge or discharge the determined battery main body. According to such an aspect, a battery main body to be charged or discharged can be determined, and appropriate charging or discharging can be performed, in accordance with the accumulation condition or deterioration condition of the stacked plurality of battery main bodies.

According to a thirteenth aspect of the present invention, an electrically assisted unit is provided. This electrically assisted unit includes the battery unit according to any one of the fifth to twelfth aspects, and a motor. According to a fourteenth aspect of the present invention, an electrically assisted moving body is provided that includes the electrically assisted unit of the thirteenth aspect. According to these aspects, an effect similar to that of the fifth to twelfth aspects is accomplished.

### BRIEF DESCRIPTION OF DRAWINGS

FIG. 1 is a schematic diagram showing an electrically assisted bicycle as an embodiment of the present invention;
FIG. 2A is a schematic diagram of a battery bracket;
FIG. 2B is a schematic diagram of a battery bracket;
FIG. 3A is a schematic diagram of a battery unit in which one battery main body is used;
FIG. 3B is a schematic diagram of a battery unit in which one battery main body is used;
FIG. 4A is a disassembly drawing of the battery unit shown in FIG. 3;
FIG. 4B is a disassembly drawing of the battery unit shown in FIG. 3;
FIG. 5A is a schematic diagram of a battery unit in which two battery main bodies are stacked;
FIG. 5B is a schematic diagram of a battery unit in which two battery main bodies are stacked;
FIG. 6A is a schematic diagram of a battery unit in which three battery main bodies are stacked;
FIG. 6B is a schematic diagram of a battery unit in which three battery main bodies are stacked; and
FIG. 7 is a schematic diagram showing an internal configuration of a battery unit in which three battery main bodies are used.

### DESCRIPTION OF EMBODIMENTS

### A. Embodiment(s):

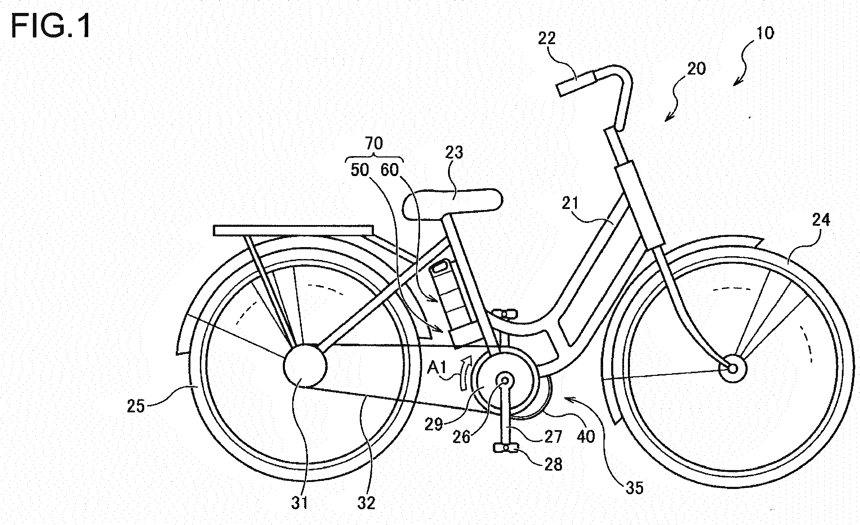

FIG. 1 shows a schematic configuration of an electrically assisted bicycle 10 as an embodiment of the present invention. The electrically assisted bicycle 10 includes a bicycle main body 20, and an electrically assisted unit 35. The bicycle main body 20 includes a vehicle body frame 21, a handlebar 22, a saddle 23, a front wheel 24, and a rear wheel 25.

A drive shaft 26 is rotatably supported on the center lower end of the vehicle body frame 21, and pedals 28 are attached, via pedal cranks 27, to both the left and right end parts of this drive shaft 26. A sprocket 29 is attached coaxially with the drive shaft 26, via a ratchet gear (not shown) for transmitting only the rotational force of the direction of the arrow A1, which corresponds to the forward movement direction of the electrically assisted bicycle 10, to the drive shaft 26. An endless chain 32 is hung between this sprocket 29 and a rear wheel power mechanism 31 provided on the center part of the rear wheel 25.

The electrically assisted unit 35 includes a motor 40, a battery unit 70, and a sensor (not shown). The sensor is provided for detecting a prescribed physical quantity related to the electrically assisted bicycle 10. The pedaling force (torque) of the pedals 28, the vehicle speed of the electrically assisted bicycle 10, and the rotational angle of the pedal crank 27, are included in such a physical quantity.

The motor 40 is provided to provide a driving force (assisting force) for supplementing human power, that is, a driving force generated by pedaling force where a user pedals the pedals 28. The driving force generated by the motor 40 acts on a transmission gear for transmitting the pedaling force of the pedals 28 to the sprocket 29, via gears (not shown). As a result, the pedaling force is supplemented, by combining the pedaling force and the assisting force. In such an electrically assisted bicycle 10, the assisting force by the motor 40 is determined as follows. First, the pedaling force (torque) of the pedals 28, the vehicle speed of the electrically assisted bicycle 10, and the rotational angle of the pedal crank 27, are detected by the sensor. Next, a prescribed algorithm is executed based on this detection result, and an optimal assistance ratio is determined. Also, the motor is controlled based on the determined assistance ratio. Various well-known algorithms can be used as such an algorithm.

In the present embodiment, a control device (not shown) is built into the motor 40. The control device is constituted, for example, as a microcomputer having a CPU and a memory. The above described algorithm is stored in the memory, and the CPU executes this algorithm. The control device may be in a different body from the motor 40.

The battery unit 70 includes a battery bracket (hereinafter, simply called a bracket) 50, and a battery 60. The bracket 50 is an attachment tool for attaching the battery 60 to the bicycle main body 20, and is non-detachably fixed to the vehicle body frame 21. Here, apart from a mode of being completely non-detachable, such as being welded, a mode of being detachable only by using a special tool (non-detachable for a general user) is also included in "non-detachable". The battery 60 is detachably attached to the bracket 50, as a power source of the motor 40. Apart from supplying accumulated power to the motor 40, the battery 60 is constituted to be chargeable, by connecting to a charging unit (not shown). The charging unit may have a mode of connecting to the battery 60 in a state where the battery 60 has been mounted on the bracket 50, or may have a mode of connecting to the battery 60 in a state where the battery 60 has been detached from the bracket 50. Moreover, regenerative power may be accumulated in the battery 60.

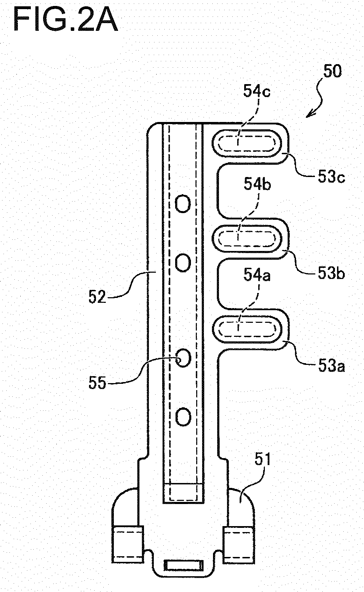

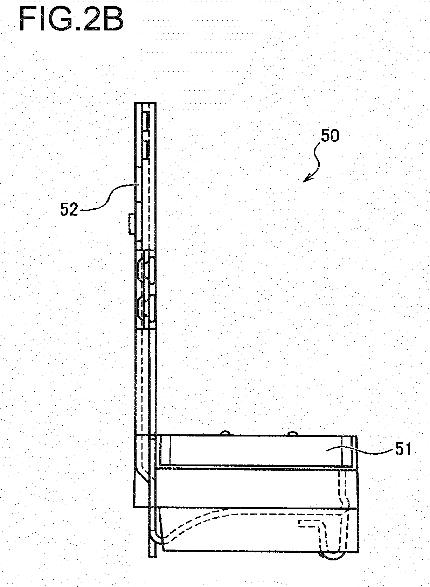

FIG. 2 is a schematic diagram showing the details of the bracket 50. As illustrated, the bracket 50 includes a supporting section 51 for supporting the battery 60, and an extension section 52 extending from the supporting section 51 in a prescribed direction (hereinafter, also called an extension direction). A discharge terminal and a charging terminal electrically connected to the battery 60 are built into the inside of the supporting section 51. The extension section 52 has attachment holes 55 formed for attaching to the bicycle main body 20 by bolts. Moreover, the extension section 52 includes three projection sections 53a to 53c projecting from the extension section 52 in a direction intersecting the extension direction (hereinafter, also called an intersecting direction. In the present embodiment, the intersecting direction is a direction orthogonal to the extension direction). The projection sections 53a to 53c are mutually spaced, along the extension direction. Moreover, in the present embodiment, the projection sections 53a to 53c are provided on one end side (the side opposite to the supporting section 51) of the extension section 52. The number of projection sections is not limited to three, and may be any number of two or more.

Engaging sections 54a to 54c for engaging with a key structure (described afterwards) provided on the battery 60 are formed on each of the projection sections 53a to 53c. In the present embodiment, the engaging sections 54a to 54c are formed as through holes that penetrate the projection sections 53a to 53c. However, the engaging sections 54a to 54c can have any well-known engaging configuration.

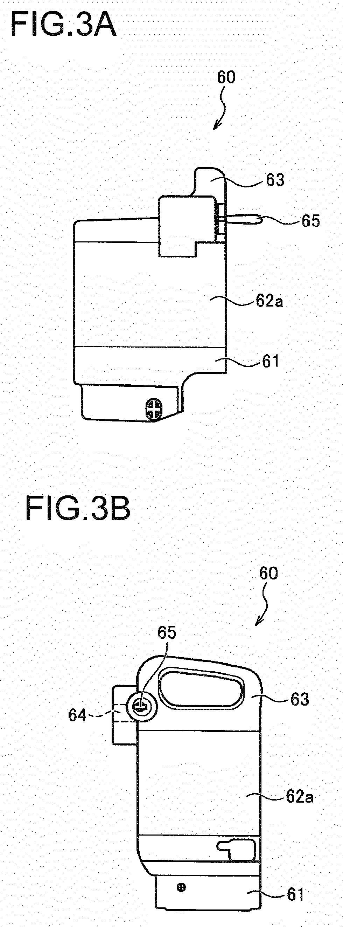

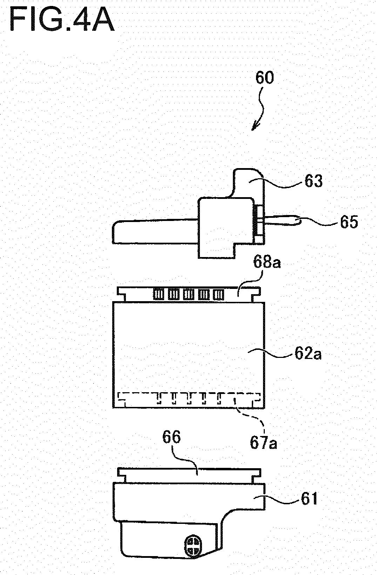

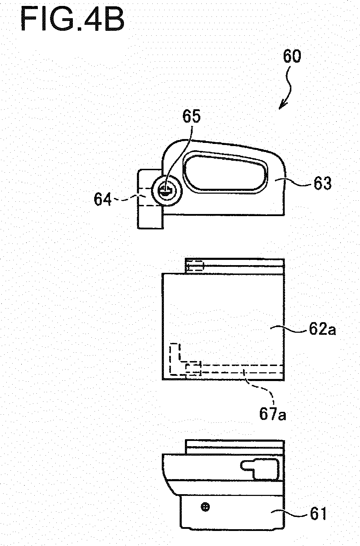

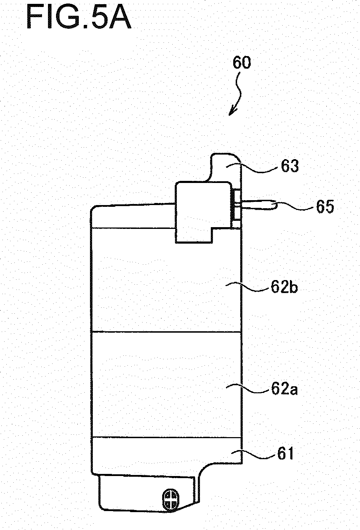

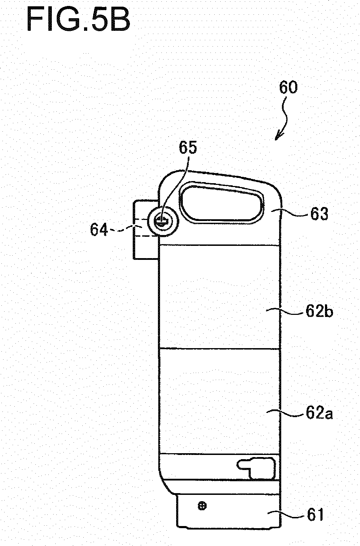

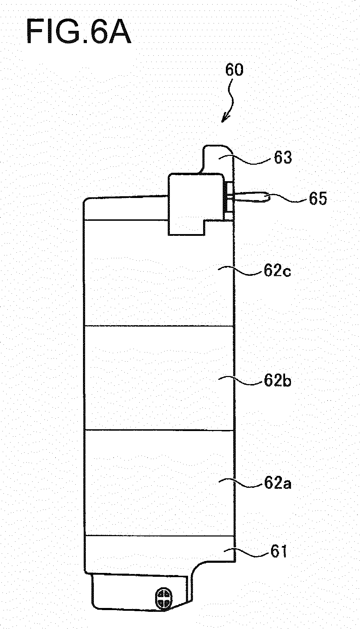

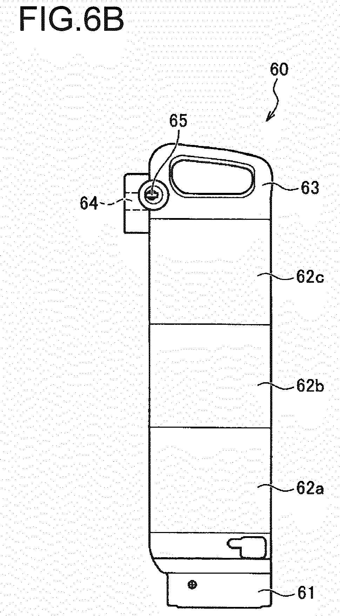

FIG. 3 is a schematic diagram showing the details of the battery 60. As illustrated, the battery 60 includes a switching control section 61, a battery main body 62a, and a key section 63. The switching control section 61, the battery main body 62a, and the key section 63 are mutually and detachably constituted, and a state where each section has been detached is shown in FIG. 4. Moreover, the battery 60 is constituted to be capable of stacking a plurality of battery main bodies. FIG. 3 shows a battery 60 in which one battery main body 62a is used, FIG. 5 shows a battery 60 in which two battery main bodies 62a and 62b are stacked, and FIG. 6 shows a battery 60 in which three battery main bodies 62a, 62b, and 62c are stacked.

In the present embodiment, as shown in FIG. 4, the switching control section 61 includes an engaging protruding section 66. The battery main body 62a includes an engaging groove 67a that engages with the engaging protruding section 66, on one end of the stacking direction. Moreover, the battery main body 62a includes an engaging protruding section 68a, on the other end of the stacking direction. The shape of the engaging protruding section 68a is the same as the shape of the engaging protruding section 66. The key section 63 includes an engaging groove (not shown) that engages with the engaging protruding section 68a, and a key structure 65. The engaging protruding section 66 is restrained by a restraining structure such as a restraining claw, when inserted into the engaging groove 67a. Similarly, the engaging protruding section 68a is restrained by a restraining structure, when inserted into the engaging groove of the key section 63. The key section 63 has a circular handle, so as to be easily held by a user. While an illustration is omitted, the battery main bodies 62b and 62c have a shape the same as that of the battery main body 62a.

One, two, or three of the battery main bodies 62a to 62c are arranged so as to be interposed between the switching control section 61 and the key section 63, such as shown in FIGS. 3, 5, and 6. In the case where two or more battery main bodies are used, these battery main bodies are stacked such as shown in FIGS. 5 and 6. The battery 60 in which any number of battery main bodies are interposed between the switching control section 61 and the key section 63 is arranged on the supporting section 51, so as to be arranged, when viewed from the supporting section 51, in the order of the switching control section 61, the battery main bodies (singular or plural), and the key section 63. Namely, the switching control section 61 and the battery main bodies (singular or plural) are sequentially stacked from the supporting section 51, and the key section 63 is stacked, on the distal end side of this. In this case, the battery main bodies and the switching control section 61 are electrically connected to the motor 40, via electrical connection points provided on the supporting section 51.

A hole 64 is formed on the key section 63. The hole 64 is configured to allow the insertion of any one of the projection sections 53a to 53c. In the case where the one battery main body 62a is used such as shown in FIG. 3, the projection section 53a closest to the supporting section 51 from among the projection sections 53a to 53c is inserted into the hole 64, and the key structure 65, and the engaging section 54a formed on the projection section 53a, engage with each other by tightening the key structure 65 in this state. As a result, the switching control section 61, the battery main body 62a, and the key section 63 are fixedly attached to the bracket 50. In this case, the switching control section 61 is arranged on the supporting section 51. In the case where the two battery main bodies 62a and 62b are used such as shown in FIG. 5, the projection section 53b is inserted into the hole 64, and the key structure 65, and the engaging section 54b formed on the projection section 53b, engage with each other by tightening the key structure 65 in this state. As a result, the switching control section 61, the battery main bodies 62a and 62b, and the key section 63 are fixedly attached to the bracket 50. Similarly, in the case where the three battery main bodies 62a to 62c are used such as shown in FIG. 6, the projection section 53c is inserted into the hole 64, and the switching control section 61, the battery main bodies 62a to 62c, and the key section 63 are fixedly attached to the bracket 50. In this way, the battery 60 can be easily locked, in accordance with the number of used battery main bodies, by inserting the projection section (in the above described example, any of the projection sections 53a to 53c) of the position corresponding to this number of battery main bodies into the hole 64. According to such a configuration, since the entire battery 60 can be locked by performing locking at only one location for a plurality of the battery main bodies 62a to 62c, the convenience of a user will be high.

In the present embodiment, in the case where at least two of the battery main bodies 62a to 62c are stacked and used, these battery main bodies are constituted to be exclusively connectable to an input/output of the battery 60 (an input at the time of charging and an output at the time of discharging). Namely, the battery main bodies 62a to 62c are not connected in series and are not connected in parallel. In other words, only one of the battery main bodies 62a to 62c is connected to the input/output. Such exclusive switching is controlled by the switching control section 61.

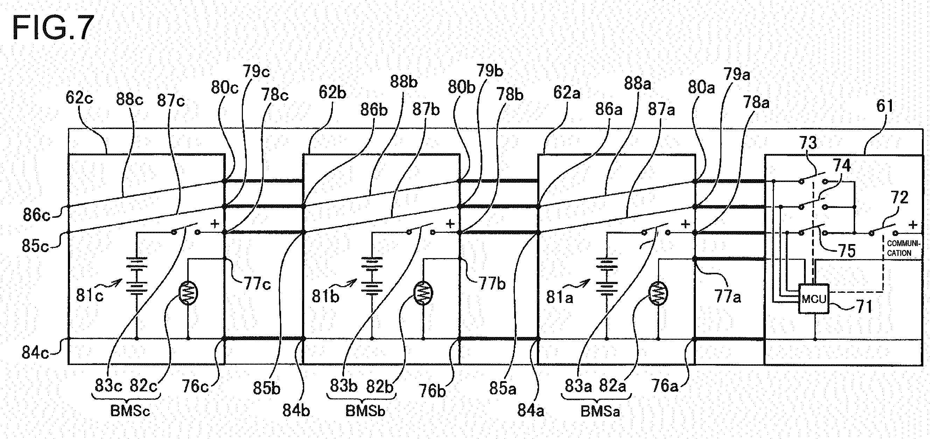

FIG. 7 is a schematic diagram schematically showing the internal configuration of the battery 60 in which three battery main bodies 62a to 62c are used. In the following description, the side connected to the motor 40 will be called an output side, and the side opposite this will be called an input side. In FIG. 7, while only a discharging circuit is shown, a charging circuit with the same configuration may be provided. As illustrated, the switching control section 61 includes an MCU 71 that controls the operation of the switching control section 61, an on-off switch 72, and switching switches 73 to 75. The on-off switch 72 is used for turning on-off the connection between the battery 60 and the motor 40, or the battery 60 and the charging unit. The switching switches 73 to 75 are used for switching the above described exclusive connection, and are connected in parallel with the on-off switch 72 and the input side of the switching control section 61.

The battery main body 62a includes connection points 76a to 80a of the output side, connection points 84a to 86a of the input side, bypass lines 87a and 88a, a battery cell 81a, and a battery management system (hereinafter, also called a BMSa) as a protection circuit. The BMSa includes a thermistor 82a, and an on-off switch 83a. The bypass line 87a is connected between the two connection points 79a and 85a without using the battery cell 81a. Similarly, the bypass line 88a is connected between the two connection points 80a and 86a without using the battery cell 81a. In the present embodiment, the battery main bodies 62b and 62c include an electrical circuit configuration the same as that of the battery main body 62a. In FIG. 7, "a" of the reference signs attached to each of the constituent elements corresponding to the battery main body 62a is indicated by replacing with "b" and "c", for each of the constituent elements of the battery main bodies 62b and 62c. Accordingly, overlapping descriptions will be omitted.

The connection points 76a, 84a, 76b, 84b, and 76c are all connected to a ground line. The MCU 71 is connected to the thermistor 82a, via the connection point 77a, and this thermistor 82a is connected to the ground line. The switching switch 75 is connected to the battery cell 81a of the battery main body 62a via the connection point 78a and the on-off switch 83a within the BMSa. The switching switch 74 is connected to a battery cell 81b via the connection point 79a, the bypass line 87a, the connection points 85a and 78b, and an on-off switch 83b within a BMSb. Namely, the switching switch 74 is connected to the battery cell 81b of the battery main body 62b, by bypassing the battery main body 62a. Similarly, the switching switch 73 is connected to a battery cell 81c via the connection point 80a, the bypass line 88a, the connection points 86a and 79b, the bypass line 87b, the connection points 85b and 78c, and an on-off switch 83c within a BMSc. That is, the switching switch 73 is connected to the battery cell 81c of the battery main body 62c, by bypassing the battery main bodies 62a and 62b.

The MCU 71 of the switching control section 61 implements the above described exclusive switching, by switching the switching switches 73 to 75. That is, the MCU 71 performs a control so that only one of the battery cells 81a to 81c and the on-off switch 72 are connected, by setting one of the switching switches 73 to 75 to on, and setting the two remaining switching switches to off. According to such a configuration, two or more of the battery main bodies are not connected at the same time to the motor 40. Namely, since the plurality of battery main bodies are not connected in parallel, the battery main bodies that are not relatively deteriorated will not deteriorate by being affected by the battery main body that is relatively deteriorated.

In the present embodiment, the MCU 71 determines a battery main body to be charged or discharged, based on a voltage detected from each of the stacked battery main bodies 62a to 62c, and switches the exclusive connection of the switching switches 73 to 75, so as to charge or discharge the determined battery main body. For example, when performing charging, the MCU 71 may control the switching switches 73 to 75, so as to perform charging by prioritizing the battery main body with a relatively low voltage. Moreover, when performing discharging, the MCU 71 may control the switching switches 73 to 75, so as to perform discharging by prioritizing the battery main body with a relatively high voltage. The voltages of the battery main bodies 62a to 62c can be detected by the MCU 71, by sequentially and exclusively turning on the on-off switches 83a to 83c. According to such a configuration, a battery main body to be discharged or charged can be determined, and appropriate discharging or charging can be performed, in accordance with the accumulation condition or deterioration condition of the stacked battery main bodies 62a to 62c. Moreover, a counter such as a Coulomb meter may be provided within the BMS. According to such a configuration, it can be accurately and easily understood to what extent the battery cells 81a to 81c are charged or discharged, by a detection value of the counter. As a result, exclusive switching can be suitably performed based on the deterioration condition of the battery cells 81a to 81c. Counters may be provided for charging and discharging.

Moreover, as described above, the battery main bodies 62a to 62c include a same electrical circuit configuration, and are constituted so that the battery cells 81a to 81c are connected in a one-to-one relationship with each of the switching switches 73 to 75, even in the case where the battery main bodies 62a to 62c are stacked in any arrangement order. Accordingly, when stacking the battery main bodies 62a to 62c, it will not be necessary for a user to worry about this arrangement order, and the convenience of the user will be improved. This point also applies to the case where stacking the two battery main bodies 62a and 62b.

According to the above described battery unit 70, a user can easily detach, or easily lock, the battery 60 having one or a plurality of battery main bodies, from or to the bicycle main body 20 (more strictly, the bracket 50 fixed to the bicycle main body 20). Moreover, by stacking and using the plurality of battery main bodies 62a to 62c, the charging frequency of the battery 60 can be reduced. Alternatively, compared to the case where a single battery main body is used, the distance capable of travelling with the electrically assisted bicycle 10 in a state where an assisting force is used can be lengthened. It is needless to say that the stacked number of battery main bodies is not limited to the above described three, and may be any number. In this case, the number of projection sections provided on the extension section 52 may match the largest assumed stacked number of battery main bodies.

Moreover, since a user can use a desired number of battery main bodies, in accordance with the conditions, the convenience of the user will be high. For example, the user may use only the single battery main body 62a, in an initial stage of use of the electrically assisted bicycle 10 (the time period when there is no deterioration in the battery main body), and in the case where the performance of the battery main body 62a deteriorates to a prescribed level, may purchase a new battery main body 62b, and use the battery main body 62b by stacking with the battery main body 62a.

### B. Modified Examples:

### B-1. Modified Example 1:

The various features of the above described battery unit 70 can be respectively omitted or combined, as necessary, separately from other features. For example, a hole for inserting the projection sections 53a to 53c may be provided on each of the battery main bodies 62a to 62c, and the battery 60 may be configured so the each of the battery main bodies 62a to 62c are individually locked. In this case, the key section 63 will not necessarily be required. Alternatively, for example, the key section 63 may have an extension portion extending to the supporting section 51 side, and may have a key structure where this extension portion engages with the supporting section 51. Namely, the key section 63 may have any key structure that can be locked in a state where at least one battery main body is interposed between the key section 63 and the supporting section 51. From the beginning, a configuration for locking the battery 60 will not be essential. Alternatively, the switching control section 61 may be non-detachably fixed to the supporting section 51. Alternatively, a switchable circuit configuration may be adopted, instead of bypass lines. In this case, it is possible for the MCU 71 to implement the above described exclusive switching, by switching a connection state of the switchable circuit configuration. Alternatively, each of the battery main bodies 62a to 62c may include mutually different electrical circuit configurations. Moreover, in this case, while it may be necessary for a user to stack the battery main bodies 62a to 62c in a predetermined arrangement order, it will be possible for the MCU 71 to implement exclusive switching, by performing a control according to the electrical circuit configurations of the battery main bodies 62a to 62c. From the beginning, the battery main bodies 62a to 62c may be constituted to be electrically connected in series or parallel. Even in such a configuration, compared to the case where a single battery main body is used, a large output can be obtained, or alternatively, the provision of an assisting force over a long time can be implemented.

### B-2. Modified Example 2:

The MCU 71 may have a function that monitors the voltages of the battery main bodies 62a to 62c at a prescribed timing. The prescribed timing may be, for example, at a fixed interval, at the time when the power supply of the electrically assisted unit 35 is applied, at the time when a prescribed travelling distance is achieved or the like. In this case, the battery 60 may include a display for notifying a user, based on a monitoring result. The presence or not of the necessity for charging, the presence or not of the necessity for a replacement of a battery main body or the like may be displayed on the display.

### B-3. Modified Example 3:

Instead of the projection sections 53a to 53c being formed on the extension section 52 of the bracket 50, and the hole 64 allowing the insertion of any of the projection sections 53a to 53c being formed on the key section 63 of the battery 60, the projection sections may be formed on the battery 60 side, and a plurality of holes allowing the insertion of these projection sections may be formed on the bracket 50 side. In this case, each of the plurality of holes may be formed in a direction intersecting the direction in which the extension section 52 extends. Moreover, the plurality of holes may be mutually spaced along the direction in which the extension section 52 extends. Even in such a configuration, the battery 60 can be suitably attached to the bracket 50.

### B-4. Modified Example 4:

The configuration of the above described battery unit 70 can be applied to various electrically assisted moving bodies capable of supplementing a driving force generated by human power with a driving force generated by electrical power. For example, a wheelchair, tricycle, baggage cart or the like may be such a moving body.

Heretofore, while embodiments of the present invention have been described based on several embodiments, the above described embodiments of the present invention are for easily understanding the present invention, and do not limit the present invention. It is needless to say that the present invention can be modified or improved, without departing from the scope of the present invention, and the equivalent of this is included in the present invention. Moreover, each of the constituent elements described in the claims and specification can be arbitrarily combined or omitted, in a range that can solve at least a part of the above described problem, or a range that accomplishes at least a part of the effect.

### REFERENCE SIGNS LIST

10 ... electrically assisted bicycle
20 ... bicycle main body
21 ... vehicle body frame
22 ... handlebar
23 ... saddle
24 ... front wheel
25 ... rear wheel
26 ... drive shaft
27 ... pedal crank
28 ... pedals
29 ... sprocket
31 ... rear wheel power mechanism
32 ... chain
35 ... electrically assisted unit
40 ... motor
50 ... bracket
51 ... supporting section
52 ... extension section
53a ... projection section
53a, 53b, 53c ... projection section
54a, 54b, 54c ... engaging section
55 ... attachment hole
60 ... battery
61 ... switching control section
62a, 62b, 62c ... battery main body
63 ... key section
64 ... hole
65 ... key structure
66 ... engaging protruding section
67a ... engaging groove
68a ... engaging protruding section
70 ... battery unit
71 ... MCU
72 ... on-off switch
73, 74, 75 ... switching switch
76a, 77a, 78a, 79a, 80a, 84a, 85a, 86a, 76b, 77b, 78b, 79b, 80b, 84b, 85b, 86b, 76c, 77c, 78c, 79c, 80c, 84c, 85c, 86c ... connection point
81a, 81b, 81c ... battery cell
82a, 82b, 82c ... thermistor
83a, 83b, 83c ... on-off switch
87a, 88a, 87b, 88b, 87c, 88c ... bypass line

## Claims

1. A battery bracket for attaching, to an electrically assisted moving body capable of supplementing a first driving force generated by human power with a second driving force generated by electrical power, a battery for use in the electrically assisted moving body, comprising:
an extension section extending in a prescribed direction; and
a plurality of projection sections projecting from the extension section in a direction intersecting the prescribed direction, wherein the plurality of projection sections are mutually spaced along the prescribed direction.

2. The bracket according to claim 1,
wherein an engaging section for engaging with a key structure provided on the battery is formed on each of the projection sections.

3. The bracket according to claim 1 or 2, further comprising:
a supporting section for supporting the battery,
wherein the plurality of projection sections are provided on one end side of the extension section, and
wherein the supporting section is provided on another end side of the extension section.

4. A battery bracket for attaching, to an electrically assisted moving body capable of supplementing a first driving force generated by human power with a second driving force generated by electrical power, a battery for use in the electrically assisted moving body, comprising:
an extension section extending in a prescribed direction; and
a plurality of holes formed in a direction intersecting the prescribed direction, wherein the plurality of holes are mutually spaced along the prescribed direction, on the extension section.

5. A battery unit for use in an electrically assisted moving body, comprising:
the battery bracket according to any one of claims 1 to 4; and
the battery,
wherein the battery comprises at least one battery main body configured to be stackable.

6. The battery unit according to claim 5 when citing claim 2,
wherein the battery comprises a key section having a hole formed to allow an insertion of one of the plurality of projection sections, the key section having a key structure for engaging with the engaging section, in a state where the projection section has been inserted into the hole.

7. The battery unit according to claim 6 when citing claim 3,
wherein the battery unit is configured so as to interpose the at least one battery main body between the supporting section and the key section, by arranging the at least one battery main body from the supporting section side, and arranging the key section on an end part opposite to the supporting section.

8. The battery unit according to claim 6 when citing claim 4,
wherein the battery comprises a projection section formed to be insertable into one of the plurality of holes.

9. The battery unit according to any one of claims 5 to 8,
wherein the at least one battery main body has an electrical circuit configuration constituted to be exclusively connectable to an input/output of the battery, in stacking more than the one battery main body.

10. The battery unit according to claim 9,
wherein the at least one battery main body is provided as a plurality of the battery main bodies, and
wherein the plurality of the battery main bodies comprise a same electrical circuit configuration.

11. The battery unit according to claim 10,
wherein each of the plurality of battery main bodies comprises:
a battery cell; and
at least one bypass line for connecting two electrical connection points without using the battery cell.

12. The battery unit according to any one of claims 9 to 11,
wherein the battery unit further comprises a switching control section constituted so as to switch the exclusive connection, and
wherein the switching control section determines a battery main body to be charged or discharged, based on a voltage detected from each of the plurality of stacked battery main bodies, and switches the exclusive connection so as to charge or discharge the determined battery main body.

13. An electrically assisted unit, comprising:
the battery unit according to any one of claims 5 to 12; and
a motor.

14. An electrically assisted moving body comprising the electrically assisted unit according to claim 13.
